Europäisches Patentamt

European Patent Office

Office européen des brevets

(19)

(11) EP 0 682 323 B1

(12) FASCICULE DE BREVET EUROPEEN

(45) Date de publication et mention
de la délivrance du brevet:
**10.11.1999 Bulletin 1999/45**

(51) Int Cl.6: **G06T 15/10**

(21) Numéro de dépôt: **95401051.8**

(22) Date de dépôt: **05.05.1995**

(54) **Dispositif de substitution d'une image artificielle présentée à un pilote d'aéronef par l'image réelle correspondante**

Vorrichtung zum Ersetzen eines einem Flugzeugpilot vorgezeigten künstlichen Bildes durch das korrespondierende reelle Bild

Substitution device of an artificial picture presented to a plane pilot by the corresponding real picture

(84) Etats contractants désignés:
**DE GB IT NL SE**

(30) Priorité: **10.05.1994 FR 9405730**

(43) Date de publication de la demande:
**15.11.1995 Bulletin 1995/46**

(73) Titulaire: **THOMSON-CSF SEXTANT
78141 Vélizy Villacoublay (FR)**

(72) Inventeur: **Parus, Roger
F-92402 Courbevoie Cedex (FR)**

(74) Mandataire: **Benoit, Monique
Thomson-CSF Propriété Intellectuelle,
13, Avenue du Président Salvador Allende
94117 Arcueil Cédex (FR)**

(56) Documents cités:
- **DISPLAYS, vol. 12, no. 3/4, Juillet 1991
  GUILDFORD GB, pages 129-140, XP 000264722
  INESON 'IMAGERY FOR A VIRTUAL COCKPIT
  264722'**
- **IEEE NATIONAL AEROSPACE AND
  ELECTRONICS CONFERENCE, 20 Mai 1985
  NEW-YORK U.S., pages 770-775, RICHARDSON
  'A FORTRAN ALGORITHM FOR TERRAIN
  PERSPECTIVE AND PLAN VIEW DISPLAY'**

**Description**

La présente invention concerne un dispositif de substitution d'une image artificielle présentée à un pilote d'aéronef par l'image réelle correspondante. Elle s'applique notamment pour la sécurisation des phases d'atterrissage d'un aéronef par l'optimisation de la transition entre la vue directe d'une scène et une image de cette même scène, synthétique ou issue de capteurs d'imagerie, et présentée en superposition à la vision directe du pilote.

Dans le système dit EVS selon la terminologie "Enhanced Vision System", utilisé pour le pilotage des aéronefs, l'image artificielle présentée en superposition de l'image réelle a pour but de suppléer la vision directe lorsque celle-ci est insuffisante, notamment en cas de brouillard. Elle est présentée en superposition avec le paysage et en conformité avec lui grâce à un collimateur tête haute. L'ensemble constitué de l'image artificielle et du paysage est donc perçu simultanément sans nécessiter de variations notables d'accommodation ou de vergence du système visuel.

Les capteurs d'imagerie sont par exemple choisis de telle façon que leur image soit moins affectée par le brouillard et les intempéries notamment que la vision directe.

Pour des raisons de sécurité, il est souhaitable que le pilote puisse acquérir la vue directe de la scène extérieure dès que la qualité de l'image directe le permet. Or, l'image artificielle se présentant en surbrillance sur le paysage, est une gêne à la vision directe.

Il existe des moyens connus de suppression de cette image directe. Dans certains cas, une commande manuelle d'extinction de l'image artificielle, à la disposition du pilote, permet de désactiver celle-ci. Le pilote peut prendre sa décision en fonction de ce qu'il voit, en particulier dans la partie du champ de vision directe non couverte par l'image artificielle. Pour certains types d'approche, il existe une hauteur de décision. Au cours de la descente, lors du franchissement de cette hauteur, le pilote doit voir la piste pour décider de poursuivre ou d'interrompre l'approche. Le pilote peut décider d'éteindre l'image artificielle à cet instant de fonctionnement pour vérifier s'il a une bonne vision de la piste et continuer la phase d'atterrissage.

Les méthodes connues d'extinction de l'image artificielle présentent plusieurs inconvénients. En effet, elles ne permettent pas de déterminer l'instant le plus approprié pour procéder à l'extinction de l'image artificielle. La suppression tardive et globale de l'image artificielle à l'instant de décision ne laisse pas assez de temps au pilote pour exploiter l'image directe ainsi démasquée. A contrario, une suppression globale de l'image artificielle plus précoce risque de priver le pilote d'informations contenues dans l'image artificielle et que la vision directe n'est pas encore en mesure d'atteindre.

Le but de l'invention est de pallier les inconvénients précités, pour permettre notamment de substituer la vision directe à l'image artificielle à l'instant le plus favorable pour la sécurité du pilotage.

A cet effet, l'invention a pour objet un dispositif de substitution d'une image artificielle présentée à un pilote d'aéronef par l'image réelle correspondante, caractérisé en ce qu'il comprend au moins :

- des moyens de simulation de la vision humaine ;
- des moyens fournissant des critères d'exploitation de l'image simulée ;
- des moyens de comparaison de l'image simulée avec les critères d'exploitation ;
- des moyens d'atténuation de l'image artificielle, l'image artificielle étant atténuée quand l'image simulée satisfait à un nombre donné de critères d'exploitation.

L'invention a pour principaux avantages qu'elle s'applique à tous types d'aéronefs, et à tous types de phases de vol, qu'elle s'adapte à tous types de temps, qu'elle est simple à mettre en oeuvre et qu'elle est économique.

D'autres caractéristiques et avantages de l'invention apparaîtront à l'aide de la description qui suit faite en regard de dessins annexés qui représentent :

- la figure 1, un pilote disposant d'une image artificielle ;
- la figure 2, un synoptique d'un mode de réalisation possible d'un dispositif selon l'invention ;
- la figure 3, un exemple d'application d'un dispositif selon l'invention ;
- les figures 4 et 5, d'autres modes de réalisation possibles d'un dispositif selon l'invention.

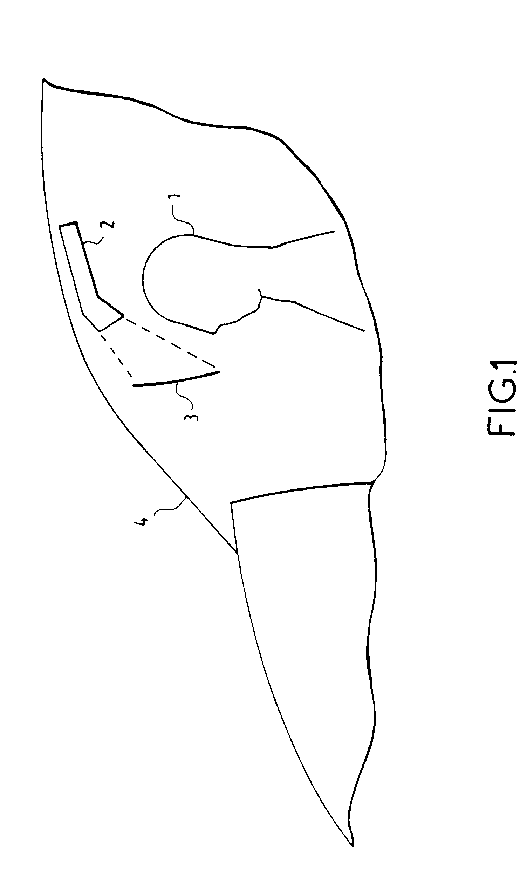

La figure 1, présente un pilote dans un cockpit d'aéronef. Dans une phase d'atterrissage par exemple, un collimateur 2 lui projette une image artificielle sur une vitre 3 située dans son champ de vision. L'image artificielle se superpose à l'image réelle du monde extérieur reçue par le pilote. En cas de mauvaise visibilité, l'image artificielle reproduit le paysage non visible directement par le pilote à l'aide de capteurs d'imagerie tels que des capteurs infrarouges ou des radars à onde millimétrique par exemple. Dès que le monde extérieur devient suffisamment visible directement au pilote à travers la surface vitrée 4 du cockpit, l'image artificielle collimatée n'a plus lieu d'être maintenue, elle devient même gênante pour le pilote, notamment à cause de sa surbrillance. Elle est donc désactivée.

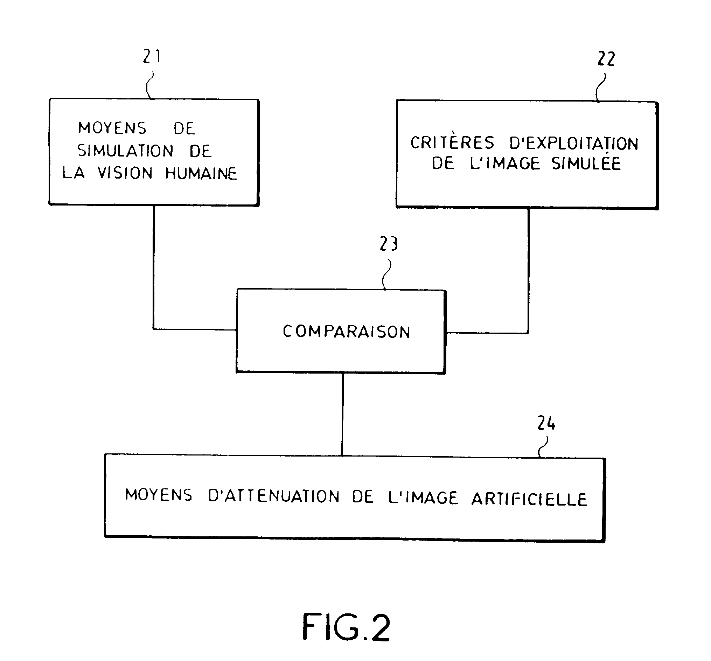

La figure 2, présente un synoptique d'un mode de réalisation possible d'un dispositif selon l'invention permettant de désactiver l'image artificielle au moment le plus favorable pour la sécurité du pilotage, l'image réelle du monde extérieur se substituant alors à l'image artificielle reproduisant ce même monde extérieur.

Le dispositif selon l'invention comporte des moyens 21 de simulation de la vision humaine. Ces moyens sont par exemple constitués d'une caméra de télévision couvrant approximativement la même bande spectrale que l'oeil humain. Les caméras usuelles dont l'élément photosensible est le silicium, ont une bande spectrale qui s'étend plus vers le proche infrarouge que celle de l'oeil humain, l'image obtenue peut être ajustée par exemple par un filtre optique pour couvrir la bande spectrale correspondant à l'oeil humain.

Le dispositif selon l'invention comporte en outre des critères d'exploitation 22 de l'image simulée. Ces moyens 22 sont reliés avec les moyens de simulation 21 de la vision humaine à des moyens de comparaison 23 de l'image simulée avec les critères d'exploitation 22. Des moyens d'atténuation 24 de l'image artificielle, produite par exemple par un collimateur tête haute, sont reliés aux moyens de comparaison 23 de façon à ce que l'image artificielle soit atténuée ou même occultée quand l'image simulée satisfait à un nombre donné de critères d'exploitation. Les critères et les seuils de comparaison sont notamment définis de façon à ce que l'image réelle de la vision directe se substitue à l'image artificielle au moment précis où elle contient suffisamment d'informations pour être exploitée en toute sécurité par le pilote.

L'image simulée étant considérée comme équivalente à l'image réelle vue directement par le pilote, il est alors possible de définir un ou plusieurs critères d'exploitation et de les mémoriser par exemple. Les critères peuvent être par exemple constitués d'indicateurs de qualité d'image.

Les indicateurs de qualité utilisés sont notamment représentatifs de la qualité de perception des objets utiles contenus dans l'image. Ces objets utiles sont par exemple des points brillants correspondant à un balisage de piste, des marques de peintures, des limites entre du béton et de l'herbe.

L'obtention des indicateurs est effectuée avec des techniques de traitement et d'extraction d'image de façon connue de l'homme du métier. A titre d'exemple, les indicateurs peuvent être les suivants.

Un premier indicateur peut être la luminance moyenne. Une valeur limite Lo de la luminance moyenne définit le choix des critères d'exploitation (image diurne ou nocture, par exemple).

Un deuxième indicateur peut être le contraste de l'image. Celui-ci est défini par exemple de la manière suivante. Soit N1 pixels les plus brillants de l'image, N1 étant un nombre entier. Soit Lmax la luminance du moins brillant des N1 pixels les plus brillants de l'image. Soit N2 un autre nombre entier fixé. Soit Lmin la luminance du plus brillant des N2 pixels les moins brillants. Ce deuxième indicateur peut être défini par le rapport

$$\frac{L\,\text{max} - L\,\text{min}}{L\,\text{min}}$$

Un troisième indicateur peut être le gradient de contraste. Soit N3 un nombre entier fixé. L étant la luminance du pixel courant de l'image. Les N3 valeurs les plus élevées du gradient de la luminance $\overrightarrow{grad\,L}$ sont mémorisées. Ce troisième indicateur est constitué par la plus faible de ces N3 valeurs notées $\overrightarrow{grad\,L}$ min.

Un quatrième indicateur peut être obtenu à partir du deuxième indicateur précité en adaptant ce dernier à des ensembles de N4 pixels contigus au lieu de pixels isolés, N4 étant un nombre entier.

Enfin un cinquième indicateur peut être obtenu à partir du troisième indicateur précité en l'adaptant à des ensembles de N5 pixels chaînés, N5 étant un nombre entier.

Pour chacun de ces indicateurs, une valeur limite définit par exemple un seuil de comparaison à partir duquel le critère d'exploitation associé est réputé satisfait. Ces valeurs limites sont par exemple mémorisées dans une base de données embarquée. Dans ce cas, les moyens de comparaison 23 comparent les valeurs de ces indicateurs, pris dans l'image simulée, en totalité ou en partie, à un ensemble de valeurs limites définissant une qualité d'image acceptable.

Pour définir et notamment mémoriser ces limites, ainsi que les utiliser au bon moment, il est nécessaire de connaître a priori les pixels que l'image simulée est susceptible de présenter. Ces pixels peuvent effectivement être connus a priori en fonction des paramètres de vol permettant de calculer approximativement la position de l'aéronef et des images d'approche qui sont mémorisées, notamment pour les procédures d'atterrissage.

Il est aussi possible que les moyens de comparaison 23 comparent les valeurs de ces indicateurs pris dans l'image simulée avec les valeurs des mêmes indicateurs calculés sur l'image artificielle. Tant qu'un nombre donné d'indicateurs de l'image simulée restent inférieur en qualité aux indicateurs correspondant de l'image artificielle, celle-ci est par exemple maintenue.

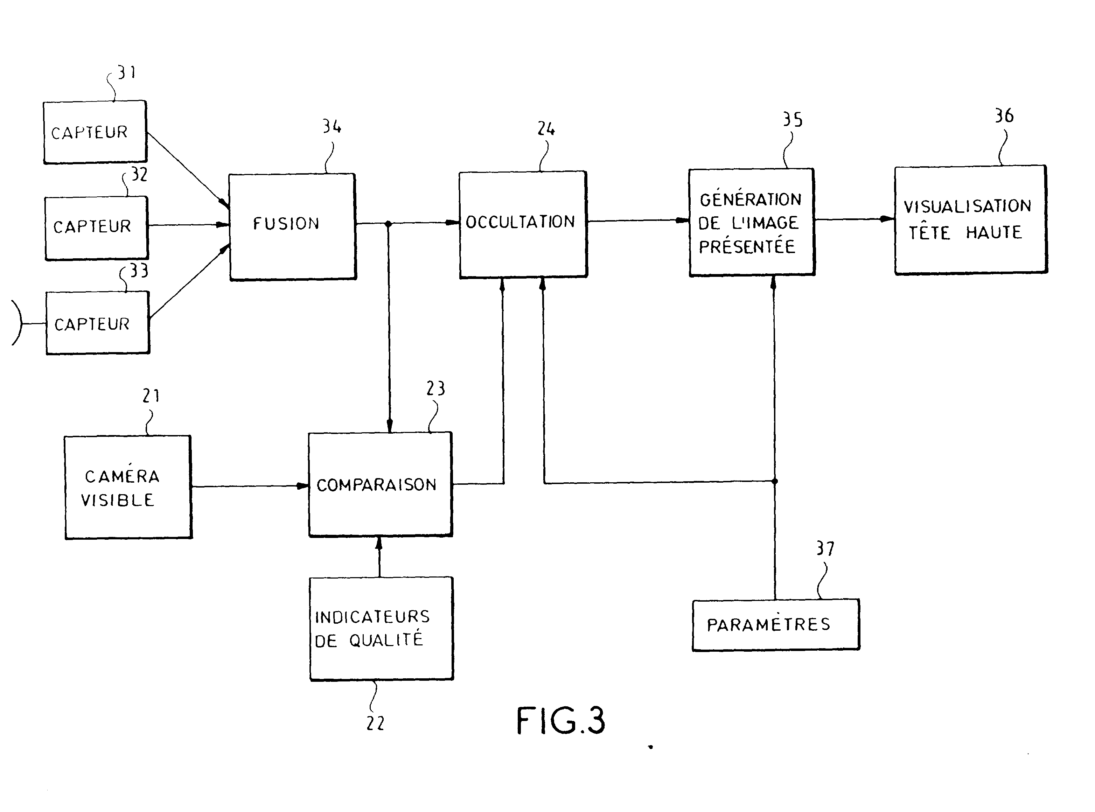

La figure 3, présente un exemple d'application d'un dispositif selon l'invention dans le cadre par exemple d'un système EVS précité utilisé pour l'atterrissage des aéronefs par mauvaise visibilité.

Le système d'imagerie artificiel EVS comprend par exemple trois capteurs 31, 32, 33. Un premier capteur 31 à infrarouge fonctionne par exemple dans la bande longueurs d'onde 3 à 5 $\mu$m. Un deuxième capteur 32 à infrarouge fonctionne par exemple dans la bande de longueurs d'onde 8 à 12 $\mu$m. Un troisième capteur 33 est par exemple constitué d'un radar à ondes millimétriques. Les images produites par ces trois capteurs 31, 32, 33 sont fusionnées par des moyens de fusion 34. L'image artificielle résultante est par exemple transmise à des moyens d'occultation 24, l'atténuation dans ce cas faisant totalement disparaître l'image.

Les moyens 21 de simulation de la vision humaine, constitués par exemple d'une caméra fonctionnant dans le spectre visible, sont reliés aux moyens de comparaison 23 permettant de comparer l'image vidéo de simulation aux indicateurs de qualités 22, du type par exemple de ceux précités. En option, l'image artificielle EVS obtenue en sortie des moyens de fusion 34 peut être délivrée aux moyens de comparaison dans le cas notamment où la comparaison entre les indicateurs de qualité se fait entre ceux de l'image vidéo et ceux de l'image artificielle EVS.

L'image artificielle peut être une image synthétique obtenue à partir d'une base de données embarquée par exemple. L'image étant synthétisée notamment en fonction de la localisation de l'aéronef.

La sortie des moyens de comparaison 23 étant reliée aux moyens d'occultation 24, ceux-ci commandent des moyens 35 de tête haute. Cette commande est fonction du résultat des moyens de comparaison 23. L'image n'étant pas présentée si ce résultat montre que la qualité de l'image ne permet pas son exploitation par le pilote avec sécurité.

La génération de l'image présentée est aussi par exemple commandée par des paramètres 37 tels que notamment les paramètres de vol de l'aéronef, ces paramètres définissant notamment sa localisation.

Ainsi, quand l'aéronef est loin d'un aéroport, en dehors d'une phase d'atterrissage notamment, l'image n'est pas présentée au collimateur 36.

Les paramètres 37 peuvent aussi commander l'occultation 24 de l'image artificielle de façon à ce que, si l'image simulée n'est toujours pas exploitable lors du franchissement de la hauteur de décision, le pilote puisse constater de lui-même l'état de la visibilité et décider d'atterrir ou de reprendre de l'altitude pour différer l'atterrissage. La hauteur de décision est une hauteur prédéfinie à partie de laquelle le pilote teste la visibilité sur des éléments au sol notamment, pour juger de la possibilité d'atterrir.

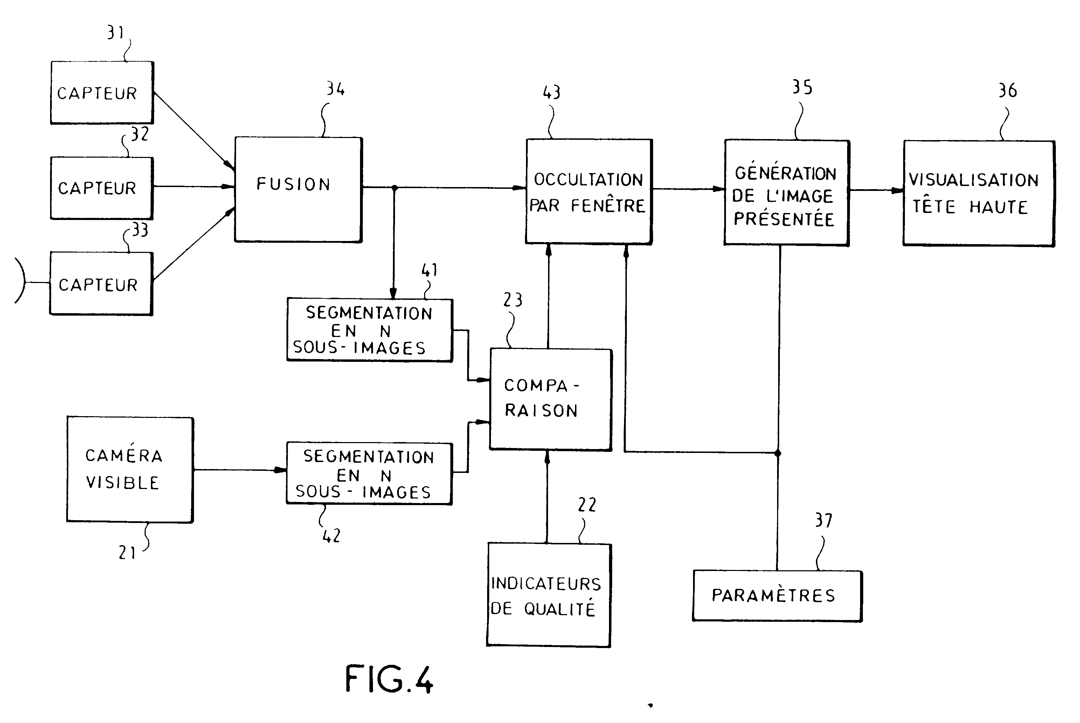

La figure 4, présente un autre exemple de réalisation possible de l'invention pour l'application de la figure 3, notamment pour tenir compte du fait que la qualité de l'image perçue en vision directe n'est pas constante dans tout le champ de vision. Pour cela, au lieu de faire l'analyse de la qualité d'image dans tout le champ et d'en déduire l'atténuation ou l'occultation globale, ce mode de réalisation permet une atténuation ou occultation par fenêtres en découpant préalablement le champ en fenêtres, ces dernières étant traitées individuellement.

Dans ce cas, le dispositif de la figure 3 est complété par des moyens 41 de segmentation de l'image artificielle intercalés entre les moyens de fusion 34 et les moyens de comparaison 23. Il est aussi complété par des moyens 42 de segmentation de l'image simulée intercalés entre la caméra 21 et les moyens de comparaison 23. La segmentation de chacune de ces images produit par exemple un nombre donné N de sous-images. Les moyens de comparaison 23 sont reliés à des moyens 43 d'occultation ou atténuation par fenêtre. La segmentation en sous-images et l'occultation par fenêtre sont réalisés par les techniques classiques de traitement vidéo.

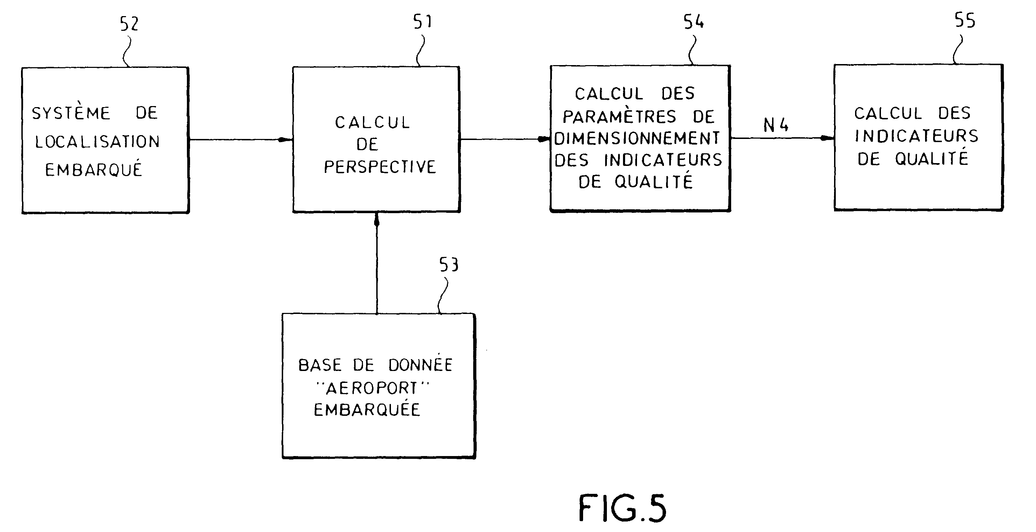

La figure 5, présente un autre exemple de réalisation possible d'un dispositif selon l'invention, notamment pour tenir compte du fait que le contenu utile et l'échelle de l'image artificielle sont fonction des paramètres de localisation de l'aéronef, ces paramètres pouvant être connus du système.

Pour cela, le principe du dispositif consiste à évaluer en permanence la liste et la taille apparente des objets exploitables dans l'image, et d'en déduire les valeurs à utiliser pour les paramètres qui dimensionnent les indicateurs de qualité, ces paramètres étant par exemple les nombres N1, N2, N3, N4, N5 précités. Par exemple, dans le cas d'une approche sur une piste comportant des marques de peinture de dimensions et de positions connues, la réglementation impose au pilote d'identifier visuellement un ensemble bien défini de ces marques pour être autorisé à atterrir. Compte tenu de la position de l'aéronef définie par le système de localisation embarquée, le dispositif calcule à chaque instant l'angle solide sous lequel le pilote voir chacune de ces marques. La valeur N4 précitée peut être par exemple choisie de façon à ce que l'équivalent en pixels de l'image corresponde au plus petit des angles ainsi calculés, ou à une valeur légèrement inférieure. En prenant ainsi une limite d'angle solide inférieure, la prise en compte des objets parasites est évitée.

Des moyens 51 de calcul de perspective sont reliés au système de localisation embarqué 52 et à une base de donnée embarquée 53 comprenant par exemple les caractéristiques de l'aéroport d'approche et notamment celles de la piste d'atterrissage concernée. La perspective est calculée par la définition des angles solides précités. Pour cela, le système de localisation embarqué 52 fournit aux moyens 51 de calcul de perspective la position de l'aéronef par rapport à la piste d'atterrissage prévue, et la base de données 53 lui fournit les caractéristiques des marques de la piste. Les moyens 51 de calcul de perspective définissent la taille apparentes des marques. Cette information est transmise à des moyens 54 de calcul des paramètres de dimensionnement des indicateurs de qualité. Ces paramètres sont notamment fonction de la taille apparente des objets, des marques de piste par exemple. Dans l'exemple de la figure 5, le nombre N4 précité est obtenu et transmis par ces moyens 54 à des moyens 55 de calcul des indicateurs de qualité 22.

## Revendications

1. Dispositif de substitution d'une image artificielle présentée à un pilote (1) d'aéronef par l'image réelle correspondante, caractérisé en ce qu'il comprend au moins :

   - des moyens (21) de simulation de la vision humaine ;
   - des moyens fournissant des critères d'exploitation (22) de l'image simulée ;
- des moyens de comparaison (23) de l'image simulée avec les critères d'exploitation ;
- des moyens d'atténuation (24) de l'image artificielle, l'image artificielle étant atténuée quand l'image simulée satisfait à un nombre donné de critères d'exploitation.

2. Dispositif selon la revendication 1, caractérisé en ce que l'image artificielle peut être occultée.

3. Dispositif selon l'une quelconque des revendications précédentes, caractérisé en ce que les moyens (21) de simulation de la vision humaine sont constitués d'une caméra vidéo.

4. Dispositif selon l'une quelconque des revendications précédentes, caractérisé en ce que les critères d'exploitation (22) sont constitués d'indicateurs de qualité d'image, les indicateurs de qualité étant représentatifs de la qualité de perception des objets utiles contenus dans l'image.

5. Dispositif selon la revendication 4, caractérisé en ce qu'un indicateur de qualité est la luminance moyenne de l'image.

6. Dispositif selon la revendication 4, caractérisé en ce qu'un indicateur de qualité est le contraste de l'image.

7. Dispositif selon la revendication 4, caractérisé en ce qu'un indicateur de qualité est le gradient du contraste de l'image.

8. Dispositif selon l'une quelconque des revendications 4 à 7, caractérisé en ce que les valeurs limites des indicateurs de qualité définissant des seuils de comparaison sont mémorisées dans une base de donnée embarquée.

9. Dispositif selon l'une quelconque des revendications 4 à 8, caractérisé en ce que les moyens de comparaison (23) comparent les indicateurs de qualité pris dans l'image simulée avec ceux calculés sur l'image artificielle, les indicateurs de l'image artificielle constituant les seuils de comparaison.

10. Dispositif selon l'une quelconque des revendications précédentes, caractérisé en ce qu'il comporte des moyens (42) de segmentation de l'image simulée en sous-images, ces moyens étant intercalés entre les moyens de simulation (21) et les moyens de comparaison (23), des moyens d'occultation (43) réalisant des occultations des sous-images de façon indépendante.

11. Dispositif selon l'une quelconque des revendications 4 à 10, caractérisé en ce qu'il comporte des moyens (51) de calcul de perspective reliés au système de localisation embarqué (52) et à une base de donnée (53) comprenant au moins les caractéristiques d'objets susceptibles d'être visualisés par l'aéronef, les moyens de calcul de perspective (51) fournissant à des moyens (54) de calcul des paramètres de dimensionnement des indicateurs de qualité, la taille apparente des objets, ces derniers moyens (54) fournissant leurs résultats à des moyens (55) de calcul des indicateurs de qualité.

12. Dispositif selon la revendication 11, caractérisé en ce que les objets sont les marques d'une piste d'atterrissage.

13. Dispositif selon l'une quelconque des revendications précédentes, caractérisé en ce qu'il comporte des moyens (41) de segmentation de l'image artificielle, la sortie de ces moyens (41) étant reliée aux moyens de comparaison (23).

14. Dispositif selon l'une quelconque des revendications précédents, caractérisé en ce que les moyens d'atténuation (24) sont commandés en fonction des paramètres de vol (37) de l'aéronef.

15. Dispositif selon la revendication 14, caractérisé en ce que l'image artificielle est occultée en dehors de la phase d'atterrissage.

16. Dispositif selon l'une quelconque des revendications précédentes, caractérisé en ce qu'il est associé à un système EVS connu sous l'expression anglo-saxonne "Enhanced Vision System".

**Patentansprüche**

1. Vorrichtung zum Ersetzen eines künstlichen Bilds, das dem Pilot (1) eines Flugzeugs dargeboten wird, durch das entsprechende reale Bild, dadurch gekennzeichnet, daß sie mindestens aufweist:

- Mittel (21) zur Simulation des vom menschlichen Auge erfaßten Bilds,
- Mittel, die Auswertungskriterien (22) des simulierten Bildes liefern,
- Vergleichsmittel (23) zum Vergleich des simulierten Bilds mit den Auswertungskriterien,
- Mittel (24) zur Abschwächung des künstlichen Bilds, die dann wirksam werden, wenn das simulierte Bild einer gegebenen Anzahl von Auswertungskriterien genügt.

2. Vorrichtung nach Anspruch 1, dadurch gekennzeichnet, daß das künstliche Bild ganz ausgeblendet werden kann.

3. Vorrichtung nach einem beliebigen der vorstehenden Ansprüche, dadurch gekennzeichnet, daß die Mittel (21) zur Simulation des vom menschlichen Auge erfaßten Bilds von einer Videokamera gebildet werden.

4. Vorrichtung nach einem beliebigen der vorstehenden Ansprüche, dadurch gekennzeichnet, daß die Auswertungskriterien (22) von Bildqualitätsindikatoren gebildet werden, die für die Qualität der Erfassung von nützlichen Objekten im Bild repräsentativ sind.

5. Vorrichtung nach Anspruch 4, dadurch gekennzeichnet, daß ein Qualitätsindikator die mittlere Leuchtkraft des Bildes ist.

6. Vorrichtung nach Anspruch 4, dadurch gekennzeichnet, daß ein Qualitätsindikator der Bildkontrast ist.

7. Vorrichtung nach Anspruch 4, dadurch gekennzeichnet, daß ein Qualitätsindikator der Gradient des Bildkontrasts ist.

8. Vorrichtung nach einem beliebigen der Ansprüche 4 bis 7, dadurch gekennzeichnet, daß die Grenzwerte der Qualitätsindikatoren, die Vergleichsschwellen definieren, in einer Datenbasis im Flugzeug gespeichert sind.

9. Vorrichtung nach einem beliebigen der Ansprüche 4 bis 8, dadurch gekennzeichnet, daß Vergleichsmittel (23) die Qualitätsindikatoren aus dem simulierten Bild mit aus dem künstlichen Bild berechneten Qualitätsindikatoren vergleichen, wobei die Indikatoren des künstlichen Bilds die Vergleichsschwellen bilden.

10. Vorrichtung nach einem beliebigen der vorstehenden Ansprüche, dadurch gekennzeichnet, daß sie Mittel (42) zur Unterteilung des simulierten Bilds in Teilbilder enthält, die zwischen die Simulationsmittel (21) und die Vergleichsmittel (23) eingefügt sind, wobei Ausblendmittel (43) Ausblendungen der Teilbilder unabhängig voneinander bewirken.

11. Vorrichtung nach einem beliebigen der Ansprüche 4 bis 10, dadurch gekennzeichnet, daß sie Mittel (51) zur Berechnung der Perspektive enthält, die an das Ortungssystem (52) des Flugzeugs und an eine Datenbasis (53) angeschlossen sind, die mindestens die Merkmale von Objekten enthält, die im Flugzeug sichtbar gemacht werden können, wobei die Mittel zur Berechnung der Perspektive (51) an Mittel (54) zur Berechnung der Bemessungsparameter der Qualitätsindikatoren die scheinbare Größe der Objekte liefern und wobei die Rechenmittel (54) ihr Ergebnis an Mittel (55) zur Berechnung der Qualitätsindikatoren liefern.

12. Vorrichtung nach Anspruch 11, dadurch gekennzeichnet, daß die Objekte Markierungen einer Landebahn sind.

13. Vorrichtung nach einem beliebigen der vorstehenden Ansprüche, dadurch gekennzeichnet, daß sie Mittel (41) zur Unterteilung des künstlichen Bilds aufweist, deren Ausgang an die Vergleichsmittel (23) angeschlossen ist.

14. Vorrichtung nach einem beliebigen der vorstehenden Ansprüche, dadurch gekennzeichnet, daß die Abschwächungsmittel (24) abhängig von Flugparametern (37) des Flugzeugs gesteuert werden.

15. Vorrichtung nach Anspruch 14, dadurch gekennzeichnet, daß das künstliche Bild außerhalb der Landephase ausgeblendet wird.

16. Vorrichtung nach einem beliebigen der vorstehenden Ansprüche, dadurch gekennzeichnet, daß sie mit einem EVS-System ("Enhanced Vision System") zusammenwirken.

## Claims

1. Device for substituting the corresponding actual image for an artificial image presented to an aircraft pilot (1), characterised in that it comprises at least:

   - means (21) for simulating human vision;
   - means providing operating criteria (22) for the simulated image;
   - means (23) for comparing the simulated image with the operating criteria;
   - means (24) for attenuating the artificial image, the artificial image being attenuated when the simulated image satisfies a given number of operating criteria.

2. Device according to claim 1, characterised in that the artificial image can be blacked out.

3. Device according to either of the preceding claims, characterised in that the means (21) for simulating human vision are constituted by a video camera.

4. Device according to any of the preceding claims, characterised in that the operating criteria (22) are constituted by image quality indicators, these indicators being representative of the quality of perception of the useful objects contained in the image.

5. Device according to claim 4, characterised in that one quality indicator is the average brightness of the image.

6. Device according to claim 4, characterised in that one quality indicator is the contrast of the image.

7. Device according to claim 4, characterised in that one quality indicator is the image contrast gradient.

8. Device according to any of claims 4 to 7, characterised in that the limit values of the quality indicators that define comparison thresholds are stored in an on-board database.

9. Device according to any of claims 4 to 8, characterised in that the comparison means (23) compare the quality indicators taken in the simulated image with those computed on the artificial image, the indicators of the artificial image constituting the comparison thresholds.

10. Device according to any of the preceding claims, characterised in that it comprises means (42) for segmenting the simulated image into sub-images, these means being interpolated between the simulation means (21) and the comparison means (23), with black-out means (43) independently blacking out the sub-images.

11. Device according to any of claims 4 to 10, characterised in that it comprises perspective calculation means (51) connected to the on-board localisation system (52) and to a database (53) which contains at least the characteristics of objects likely to be visualised by the aircraft, the perspective calculation means (51) supplying computation means (54) with parameters for rating the quality indicators and the apparent size of the objects, these means (54) supplying their results to means (55) for computing the quality indicators.

12. Device according to claim 11, characterised in that the objects are the markings of a landing strip.

13. Device according to any of the preceding claims, characterised in that it comprises means (41) for segmentation of the artificial image, the output of these means (41) being connected to the comparison means (23).

14. Device according to any of the preceding claims, characterised in that the attentuating means (24) are controlled in response to the aircraft's flight data (37).

15. Device according to claim 14, characterised in that outside the landing phase the artificial image is blacked out.

16. Device according to any of the preceding claims, characterised in that it is associated with a known Enhanced Vision System (EVS).

FIG.1

EP 0 682 323 B1

| 21 | 22 |
|---|---|
| MOYENS DE SIMULATION DE LA VISION HUMAINE | CRITÈRES D'EXPLOITATION DE L'IMAGE SIMULÉE |

23

COMPARAISON

24

MOYENS D'ATTENUATION DE L'IMAGE ARTIFICIELLE

FIG.2

FIG.3

FIG.4

EP 0 682 323 B1

EP 0 682 323 B1

| SYSTÈME DE LOCALISATION EMBARQUÉ | | CALCUL DE PERSPECTIVE | | CALCUL DES PARAMÈTRES DE DIMENSIONNEMENT DES INDICATEURS DE QUALITÉ | N4 | CALCUL DES INDICATEURS DE QUALITÉ |

52  51  54  55

BASE DE DONNÉE "AEROPORT" EMBARQUÉE

53

FIG.5